(19) Europäisches Patentamt
European Patent Office
Office européen des brevets

(11) Publication number: **0 055 489 A1**

# (12) EUROPEAN PATENT APPLICATION

(21) Application number: 81110828.1

(22) Date of filing: 29.12.81

(51) Int. Cl.³: C 02 F 1/56
B 03 D 3/06

(30) Priority: 30.12.80 US 221505

(43) Date of publication of application: 07.07.82 Bulletin 82/27

(84) Designated Contracting States: AT BE CH DE FR GB IT LI LU NL SE

(71) Applicant: UNION CARBIDE CORPORATION
Old Ridgebury Road
Danbury Connecticut 06817(US)

(72) Inventor: Braun, David Bernard
117 Walnut Grove
Ridgefield 06877 New Jersey(US)

(72) Inventor: Fan, You-Ling
3 Heritage Court
East Brunswick Connecticut(US)

(74) Representative: Wuesthoff, Franz, Dr.-Ing. et al,
Patentanwälte Wuesthoff -v. Pechmann-Behrens-Goetz
Schweigerstrasse 2
D-8000 München 90(DE)

## (54) A process for the flocculation of mineral containing slurries.

(57) Described herein is a process for flocculating an aqueous slurry containing minerals which comprises the sequential addition of a synergistic amount of an anionic polymer followed by a cationic polymer and thereafter allowing said minerals to settle from said slurry to provide a clear aqueous supernatant.

EP 0 055 489 A1

This invention is directed to a process for flocculating an aqueous slurry containing minerals by the sequential addition of a synergistic amount of an anionic polymer followed by a cationic polymer. This process is especially suitable for flocculating taconite tailings.

Taconite tailings are a by-product of the beneficiation of iron ore. The beneficiation process involves dry and wet grinding of the ore to obtain small particles followed by separation of the iron bearing minerals. The separation of the iron bearing minerals. The separation leaves behind a dilute aqueous slurry containing principally silica and ilmenite ($FeTiO_3$) as well as smaller amounts of clay and other minerals. The particles in the slurry settle very slowly. In order to speed the settling of the particles, cationic flocculants are widely used in combination with mechanical thickeners. However, the cationic flocculants tend to produce small flocs which do not compact into a high density, high solids content sediment which is sometimes desirable for the most efficient operation of the mechanical thickeners.

Thus, a need exists to develop a process whereby a slurry containing minerals can be flocculated to produce higher sediment solids content.

THE INVENTION

It has now been found that an aqueous slurry containing minerals can be flocculated to produce a high sediment solids content by sequentially adding

BAD ORIGINAL

a synergistic amount of anionic polymer followed by a cationic polymer to the slurry and thereafter allowing said minerals to settle from said slurry to provide a clear aqueous supernatant.

It has also been found that the process of this invention provides supernatant clarity equal to a flocculation process utilizing a cationic polymer at substantially lower total flocculant concentration. Additionally, settling rates of the flocs are faster using the process of this invention as compared to a process utilizing a cationic polymer.

Further, the results utilizing the process of this invention are especially surprising since the addition of a mixture of a cationic and anionic polymer to the aqueous slurry containing minerals produces little flocculation. Additionally, the sequential addition of a cationic polymer followed by an anionic polymer to the aqueous slurry results in little, if any, improvement over using the cationic polymer alone.

The anionic polymers which may be used in this invention are high molecular weight, synthetic, organic polymers characterized as consisting of linear carbon to carbon chains (polyalkanes) obtained by vinyl polymerizing one or more vinylidene monomers bearing a carboxylic or sulfonic acid group, or an alkali metal salt of such acidic groups. These polymers may be homopolymers or interpolymers.

BAD ORIGINAL

In such interpolymers, it is essential that sufficient carboxylic or sulfonic acid bearing monomers, or salts thereof, or such monomers with other monomers containing water-solubilizing groups be present in the finished polymer to render it water-soluble. Usually, a minimum of at least about 50 mole percent of the combined monomer moieties should bear water-solubilizing groups in order to insure that the resulting polymer is properly water-soluble. Also, it is essential that a minimum of about 4 mole percent of the monomer moieties combined in the finished polymer should bear an anionic substituent of the specified class of sulfonic, sulfonate, and carboxylic groups.

By "high molecular weight", as applied to the above anionic polymeric agents, is meant an average molecular weight of at least about 0.5 million. The term "water-soluble" means dispersible in water to provide a visually continuous dispersion infinitely dilutable with water.

A species of anionic polymer for use in accordance with the present invention is a high molecular weight homopolymer of an alkali metal salt of vinyl benzene sulfonic acid. Similar polymers correspond to water-soluble copolymers prepared by the vinyl polymerization of a major proportion of vinyl benzene sulfonic acid, or an alkali metal salt thereof, and a minor proportion of a monomer copolymerizable therewith such as acrylamide, methacrylamide, acrylonitrile, methacrylonitrile, styrene, vinyl toluene,

methyl acrylate and the like. For good results, such polymeric agents should have a molecular weight of at least 1,000,000 and more preferably of at least 4,000,000.

Another variety of anionic polymers suitable for use in accordance with the invention is constituted by high molecular weight, water-soluble copolymers of styrene and maleic anhydride. Such copolymers are generally employed in the form of the alkali metal salts thereof, preferably the sodium salt, although the acid form obtained by acid hydrolysis of the anhydride rings may also be employed. In order to obtain the advantages of the invention, it is necessary that the styrene maleic anhydride copolymers have molecular weights of at least 1,000,000 and preferably of at least 4,000,000.

Anionic acrylic polymers that can be employed in the present invention are water-soluble, substantially linear polymers of high molecular weight obtained by the vinyl polymerization of acrylic acid, methacrylic acid, sulfoethyl acrylate, carboxyethyl acrylate or water-soluble salts of the foregoing acidic monomers or by copolymerization of the acidic monomers, or alkali metal salts thereof, with suitable amounts up to about 96 mole percent of other vinyl monomers such as acrylamide and methacrylamide.

Other suitable anionic acrylic polymers are obtained as the vinyl polymerization products of acrylamide or methacrylamide, or as the copolymerization products of such monomers with other suitable monomers

including, for example, acrylonitrile, methacrylonitrile, lower alkyl esters of the acrylic acids, vinyl alkyl ethers and the like monoethylenically unsaturated compounds. During the polymerization reaction or thereafter with appropriate treatments, carboxamine moieties of the polymer are hydrolyzed to provide a desired number of anionic carboxylic or carboxylate groups.

Anionic polymeric agents can also be produced by hydrolysis of preformed non-ionic polymers. For example, vinyl polymerized forms of acrylonitrile or methacrylonitrile can be hydrolyzed by reacting them with an aqueous metal hydroxide solution to convert the nitrile groups to the corresponding alkali metal carboxylate groups. Similarly, polymers or copolymers of alkyl esters of unsaturated acids can be saponified with an alkali metal hydroxide to convert ester groups to alkali metal carboxylate groups.

Preferred polymers are of the following formula:

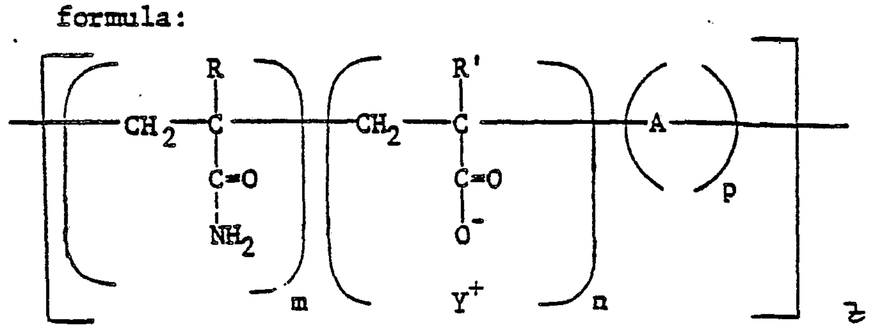

wherein R and R' are, independently, H or $-CH_3$; $Y^+$ is $H^+$, $-NH_4^+$ or an alkali (such as $Na^+$ or $K^+$) or alkaline earth (such as $Mg^{++}$ or $Ca^{++}$) metal ion; m is 0 to 96, preferably 0 to about 60; m + n + p equal 100; z is greater than about 200; and A is at least one of the following:

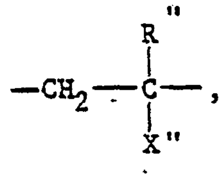

wherein R" is H or $-CH_3$ and X" is

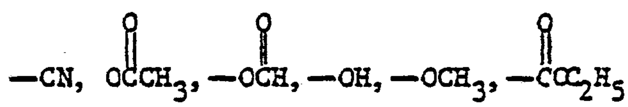

$-SO_3^-Y^+$ or 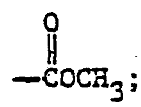

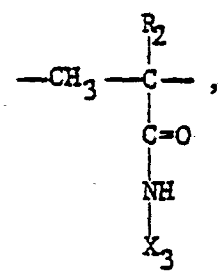

wherein each $R_2$ is H or $-CH_3$ and $X_3$ is

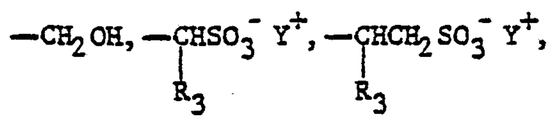

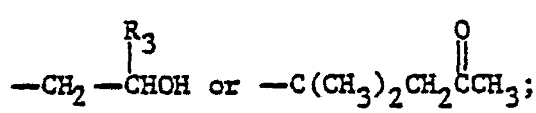

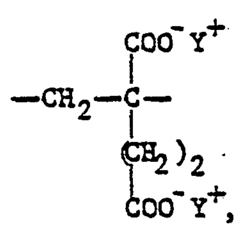

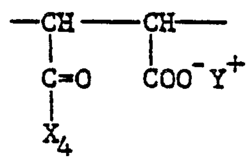

wherein $X_4$ is $-O^- Y^+$, $-NH_2$ or $-OR_3$ ($R_3$ being $-CH_3$ or $-CH_2CH_3$); or

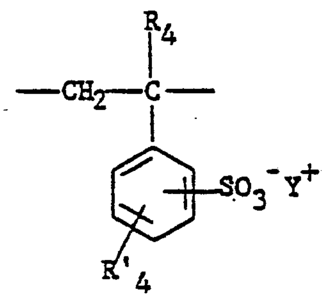

wherein $R_4$ and $R'_4$ are, independently, H or $-CH_3$.

Another preferred class of polymers are terpolymers having an intrinsic viscosity of from about 8 to about 30, preferably from about 12 to about 26 and most preferably from about 14 to about 25 dl/g as measured in a one normal (N) aqueous sodium chloride solution at 25°C.

The terpolymers are of the following general formula:

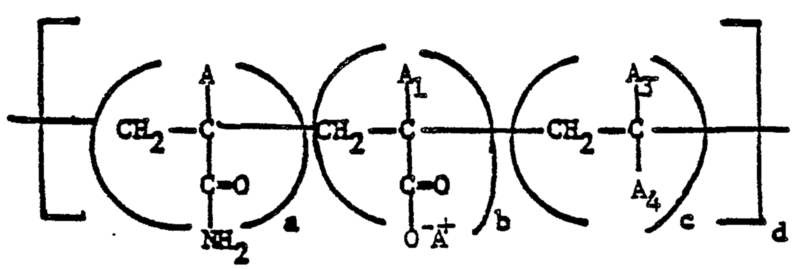

wherein A, $A_1$ and $A_3$ are independently hydrogen or methyl, $A_2^+$ is an alkali metal ion, such as $Na^+$ or $K^+$, or an alkaline earth metal ion, such as $Mg^{++}$ or $Ca^{++}$, $A_4$ is lower alkoxy or an acyloxy group, or an acryloxy preferably $-O-\overset{O}{\overset{\|}{C}}-A_5$, wherein $A_5$ is alkyl of 1 to 5 carbon atoms, (a) constitutes from about 5 to about 90, preferably from about 30 to about 60 percent, (b) constitutes from about 5 to about 90, preferably from about 30 to about 60 percent, (c) constitutes from 0.1 to about 20, preferably from about 1 to about 5 percent, and (d) is an integer of from about 100 to about 100,000.

The preferred terpolymers are of the following formula:

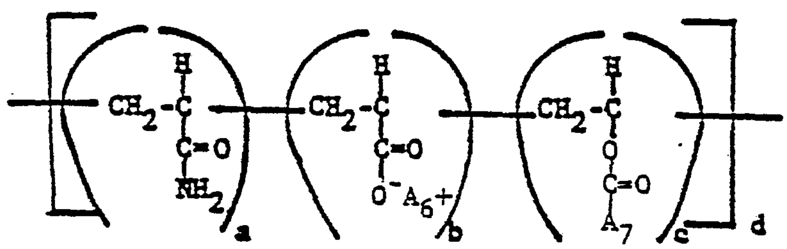

wherein $A_6^+$ is $Na^+$ or $K^+$, $A_7$ is methyl, ethyl, or butyl, and a, b, c, and d are as previously defined.

Cationic polymers used in the invention are water-soluble, synthetic, organic polymers characterized as containing in or attached along the polymeric chain a plurality of amino, imino or quaternary ammonium groups. The cationic, polyelectrolytes have no critical molecular limitations. It is preferred, however, to operate with higher molecular weight polymers.

Representative of such cationic, nitrogenous polymers are homopolymers and water-soluble copolymers of one or more monomers such as N-vinylpyridine and substituted derivatives thereof; mono-. di-, or trialkylammonium salts, e.g., vinyl benzyl dimethylammonium chloride; diallyl dimethylammonium chloride; allylamine and N-alkyl substituted derivatives thereof, aminoethyl acrylate hydrochloride or aminoethyl methacrylate hydrochloride and, in general, any ammonium or substituted ammonium alkyl acrylate or methacrylate such as N-methyl- or N,N-dimethylaminoalkyl acrylate or methacrylate, wherein the alkyl groups contain 2 or 3 carbons, or the like. Other suitable cationic, nitrogenous polymers are obtained when a nitrogen containing monomer is copolymerized with one or more other monoethylenically unsaturated monomers capable of undergoing vinyl polymerization, provided that the resulting copolymer is water-soluble and essentially free of anionic substituents. In such copolymers, at least about 5 mole percent, preferably at least 10 mole percent, of the monomers combined in the copolymer should be cationic, nitrogen containing monomers. Suitable monoethylenically unsaturated monomers to be copolymerized with these cationic monomers include acrylamide, methacrylamide, acrylonitrile, the lower alkyl esters of acrylic and methacrylic acids, vinyl methyl ether, N-vinyl oxazolidinone, N-vinyl pyrrolidinone and the like. It should be noted that for the purposes of preparing cationic polymers for the present invention, the amide groups, such as acrylamide,

and nitrile groups, such as in acrylonitrile, are not sufficiently cationic. However, monomers containing these groups can be employed in conjunction with other nitrogenous, cationic monomers to provide effective cationic polymers.

When the comonomers employed in the preparation of cationic organic polymers embody water-solubilizing groups, such comonomers may be present in amounts up to 95 mole percent of the combined moieties in the finished cationic, nitrogenous polymer. When hydrophobic comonomers such as the alkyl esters of acrylic and methacrylic acids or styrene are interpolymerized with the cationic monomers, it is generally required, in order to produce a water-soluble polymer, that at least about 60 mole percent of the combined monomer moieties be hydrophilic, i.e., bearing water-solubilizing groups.

A class of cationic polymers is represented by water-soluble polyethylenimines of high molecular weight, substituted polyethylenimines and the mineral acid and quaternary ammonium salts thereof. Some polyethylenimines suitable for use in the invention can be represented by the formula:

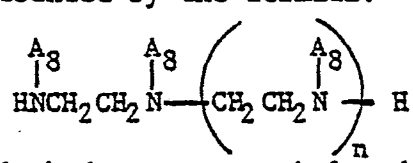

wherein $A_8$ is hydrogen or methyl and n has a value of at least 400, preferably of at least 2,000. Desirable polyethylenimines can be characterized by the viscosity of aqueous solutions thereof. Thus, water-soluble polyethylenimines having viscosities of at least about 0.8 centistoke and preferably at least 2 centistokes for an aqueous, one percent by weight solution thereof are preferred cationic polymers. Also, the various salts of these polymers such as the interreaction products thereof with hydrochloric, sulfuric, phosphoric, carbonic and acetic acids are efficient cationic polymers.

A useful group of cationic polymers which may be employed are the high molecular weight, water-soluble polymers of the dialkyl diallyl quaternary ammonium chlorides. The preparation and use of this class of compounds is illustrated in Butler U.S. Pat. No. 3,288,770, Boothe U.S. Pat. Nos. 3,461,163 and 3,472,740, and Schuller, et al. U.S. Pat. No. 2,923,701.

Another useful class of cationic polymers are the acryloxyalkyl quaternary ammonium compounds. The polymeric form of these compounds is represented by the formula

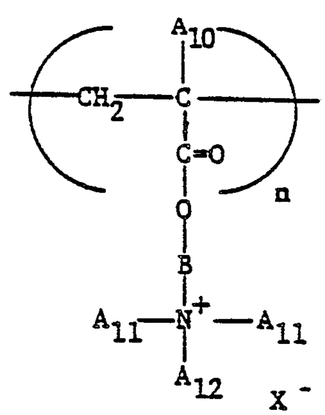

wherein $A_{10}$ is H or $CH_3$; $A_{11}$ is a lower alkyl group of 1 to 4 carbon atoms; $A_{12}$ is H or a lower alkyl group of 1 to 4 carbon atoms; X is an anion selected

from chlorine, bromine, and methyl sulfate; B is an alkyl group of 1 to 6 carbon atoms or an hydroxy alkyl group of 1 to 4 carbon atoms. The preferred monomers to make units of this structure are dimethylaminoethyl methacrylate, 2-hydroxy-3-methacryloxy propyltrimethyl ammonium chloride, and, particularly, 2-methacryloxyethyl trimethyl ammonium chloride.

Still another useful class of cationic polymers are the acrylamido-alkyl quaternary ammonium structures represented by the formula

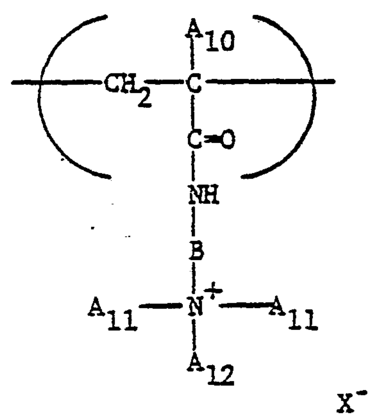

where $A_{10}$ is H or $CH_3$; $A_{11}$ is a lower alkyl group of 1 to 4 carbon atoms; $A_{12}$ is H or a lower alkyl group of 1 to 4 carbon atoms; X is an anion selected from chlorine, bromine, and methyl sulfate; B is an alkyl group of 1 to 6 carbon atoms or an hydroxy alkyl group of 1 to 4 carbon atoms. The preferred monomers to make units of this structure are dimethylaminoethyl methacrylate, 2-hydroxy-3-methacryloxy propyltrimethyl ammonium chloride, and particularly, 2-methacryloxyethyl trimethyl ammonium chloride.

A particularly useful group of acrylamidoalkyl quaternary ammonium monomers are represented by the polymeric formula

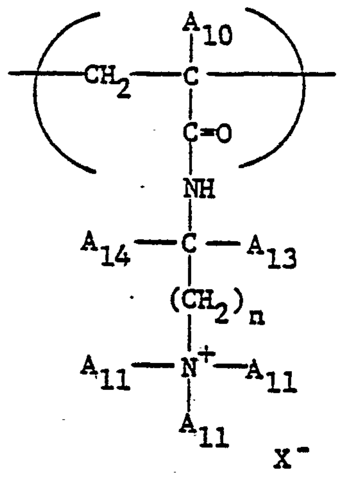

wherein $A_{10}$, $A_{11}$, and $X^-$ are as defined above and $A_{13}$ is H or a linear or branched alkyl group of up to 5 carbon atoms and $A_{14}$ is phenyl or a linear or branched alkyl group of up to 5 carbon atoms and n is an integer from 1 to 3.

Also, the poly(alkylation quaternary ammonium) compounds usually referred to as ionenes are useful. These types of polymers were first reported by C. S. Marvel in the early 1930's and have been well documented in the literature since then. For example, see Ritter U.S. Pat. No. 2,261,002; Searle U.S. Pat. No. 2,271,378; Kirby U.S. Pat. No. 2,375,853 and 2,388,614; Bock et al. U.S. Pat. No. 2,454,547 and McCarty U.S. Pat. No. 3,206,462.

The use of cationic condensation polymers are also included. These polymers may be polyethylene imines or partially quaternized polyethylene imines. They may also be cationic condensation polymers prepared

by condensing polyalkylene polyamines with alkyl dihalides such as ethylene dichloride and/or α,β epoxyhalides such as epichlorohydrin. For example, see Wittcoff U.S. Pat. No. 2,483,749; Rogers et al. U.S. Pat. No. 3,320,317; Walker et al. U.S. Pat. No. 3,428,680; Voss U.S. Pat. No. 3,408,440 and Schiegg U.S. Pat. No. 3,391,090.

The anionic and cationic polymers are well known in the art.

In the practice of this invention, the aqueous slurry containing the minerals, particularly the aqueous slurry of taconite tailings, is first treated with from about 0.1 to about 100, preferably from about 1 to about 25, parts per million parts of contained solid of the anionic polymer. The slurry is then mixed with the anionic polymer for about 0.5 to about 5 minutes. Then from about 0.1 to about 100, preferably from about 1 to about 25, parts per million parts of contained solid of the cationic polymer is added to the aqueous slurry and the combination mixed for about 0.5 to about 5.0 minutes. The slurry is generally treated at temperatures of from about 5 to about 30°C.

After the slurry has been treated with the anionic and cationic polymers, settling of the minerals generally occurs within about 10 minutes after the polymer treatment has been effected. The particular time of settling will vary depending upon the polymers composition, polymers molecular weight, the use level of polymers, and the like. Extended times of settling are not necessary since effective settling occurs

rapidly.

Once settling has occurred the clear supernatant liquid is removed using conventional equipment associated with such procedures.

EXAMPLES

The following examples serve to give specific illustrations of the practice of this invention but they are not intended in any way to limit the scope of this invention.

In the following Examples the designations are used:

Anionic Polymer 1 - an acrylamide/sodium acrylate/ethyl acrylate terpolymer. (The terpolymer contained 51 mole percent of acrylamide, 35 mole percent of sodium acrylate and 14 mole percent of ethyl acrylate. The terpolymer had an intrinsic viscosity of 16 dl/g as measured in a 1N NaCl solution at 25°C.)

Anionic Polymer 2 - an acrylamide/sodium acrylate/vinylacetate terpolymer. (The terpolymer contained 54 mole percent of acrylamide, 41 mole percent of sodium acrylate and 5 mole percent of vinylacetate. The terpolymer had an intrinsic viscosity of 13.8 dl/g as measured in a IN NaCl solution at 25°C.

Nonionic Polymer 1 - an acrylamide homopolymer (Diaclear MN 3000 sold by Mitsubishi Chemical Industries, Ltd.).

Anionic Polymer 3 - a 12 mole percent sodium acrylate/acrylamide copolymer (Diaclear MA-3000-L sold by Mitsubishi Chemical Industries, Ltd.

Anionic Polymer 4 - a 5 mole percent sodium acrylate/acrylamide copolymer (Diaclear MA-3000-4L sold by Mitsubishi Chemical Industries, Ltd.).

Anionic Polymer 5 - a 9 mole percent sodium acrylate/acrylamide copolymer (Diaclear MA-3000-2L sold by Mitsubishi Chemical Industry, Ltd.).

Anionic Polymer 6 - a 24 mole percent sodium acrylate/acrylamide copolymer (Diaclear MA-3000-H sold by Mitsubishi Chemical Industry, Ltd.).

Anionic Polymer 7 - a 34 mole percent sodium acrylate/acrylamide copolymer (Diaclear MA-3000-SH sold

by Mitsubishi Chemical Industry, Ltd.).

Anionic Polymer 8 - a 49 mole percent sodium acrylate/acrylamide copolymer (Diaclear MA-3000-4H sold by Mitsubishi Chemical Industry, Ltd.).

Anionic Polymer 9 - an 80 mole percent sodium acrylate/acrylamide copolymer (Diaclear MA-3000-6H sold by Mitsubishi Chemical Industry, Ltd.).

Cationic Polymer 1 - poly(diallyl dimethyl ammonium chloride) [Calgon Catfloc M-502, sold by Calgon Corporation].

Cationic Polymer 2 - quaternized dimethylamino ethyl methacrylate homopolymer.

Anionic Polymer 10 - An acrylamide/sodium acrylate/vinylacetate terpolymer. (The terpolymer had an intrinsic viscosity of 18.797 dl/g as measured in a 1N NaCl solution at 25°C).

The following procedure was employed in adding the flocculant(s) to the aqueous slurry and testing the resultant slurry for initial settling rate, supernatant clarity, and underflow solids content.

Cylinder Settling Tests were used in the Examples. In this test a 1-liter glass cylinder was filled with 1000 ml of taconite tailing. If a single dosage of flocculant was used, it was added, as a 0.01 wt. % solution, at the start of the test. The cylinder was then stoppered and inverted 10 times to mix the flocculant with the tailing. The cylinder was placed on a bench and a stopwatch was started. A piece of narrow masking tape was affixed vertically to the outside of the cylinder and the starting height of the tailing sample was marked on the masking tape. The height of the interface between clear supernatant and the settling solids was marked on the tape at 1.0 min. intervals for 8-10 minutes. At 2.0, 5.0 and 8.0 min. after the start of the test a Brinkman Probe Colorimeter was used to measure the % Transmittance (clarity) of the supernatant.

When two flocculants were used the same procedure was followed, except that a 0.01 wt. % solution of the first flocculant was added and the cylinder was inverted 5 times. Then a 0.01 wt. % solution of the second flocculant was added and the cylinder was inverted 5 more times. Then the stopwatch was started.

Initial Settling Rate $t_{70}$:

The term $t_{70}$ is defined as the time required for the interface between supernatant and sediment to move to 70% of the original height of the sample in the cylinder. This time, in seconds, was determined in the tests by plotting the height of the interface vs. time on linear rectangular coordinate paper, then reading the time to reach 70% of the original height from this graph.

% Transmittance - $T_5$

The % Transmittance of the supernatant is measured at 2, 5 and 8 minutes after the start of the test. The following relationship exists between the

% transmittance, T, and the time, t, when the transmittance was measured:

$$T = bt^m \quad (1)$$

or:

$$\ln T = m(\ln t) + \ln b \quad (2)$$

Linear regression analysis is used to calculate the statistically best value of T at t = 5 min., which is designated $T_5$.

Underflow Solids Content - $S_5$

This technique includes one important assumption: all the solids in the original tailing sample are in the sediment after the test is complete.

To calculate the underflow solids content using this assumption we proceeded as follows:

$$S = \frac{AB}{100} \quad (3)$$

Where: S = the wt. % of solids in the cylinder in grams.

A = Solids content of tailing sample in wt. %.

B = Weight of the tailing sample in grams.

Then: $D = B-S$ (4)

Where: D = weight of water in the cylinder in grams.

And:

$$F = (H_o-H_5)C \quad (5)$$

Where: F = weight of water in the supernatant in grams

$H_o$ = original height of sample

in the cylinder in inches

$H_5$ = the height of sediment in the cylinder 5 minutes after the start of the test in inches.

C = the cylinder constant in gms of water/inch.

Therefore:

$$W = D - F \qquad (6)$$

Where: W = the weight of water in the sediment in grams.

And:

$$S_5 = \frac{S}{W + S} \times 100 \qquad (7)$$

Where: $S_5$ = wt. % solids in the sediment 5 minutes after the start of the test.

Or, by combining equations (3) to (6):

$$S_5 = \frac{AB}{B-(H_o-H_t)C} \qquad (8)$$

<u>Control A</u>

The initial settling rate, percent transmittance and underflow solids content of an aqueous slurry of taconite tailings was measured according to the procedure described, <u>supra</u>.

The results are shown in Table I.

<u>Control B</u>

10.4 parts per million (ppm) of Cationic Polymer 1 was added to the aqueous slurry of taconite tailings by the procedure described <u>supra</u> and the slurry tested as described, <u>supra</u>.

The results are shown in Table I.

Control C

5.2 ppm of Cationic Polymer 1 was added to the aqueous slurry of taconite tailings, mixed, and then another 5.2 ppm of Cationic Polymer I was added to the slurry by the procedure described supra and the slurry tested as described, supra.

The results are shown in Table I.

Control D

10.4 ppm of Anionic Polymer 1 was added to the aqueous slurry of taconite tailings by the procedure described supra and the slurry tested as described, supra.

The results are shown in Table I.

Control E

5.2 ppm of Anionic Polmer 1 was added to the aqueous slurry of taconite tailings, mixed, and then another 5.2 ppm of Anionic Polymer 1 was added to the slurry by the procedure described supra and the slurry tested as described, supra.

The results are shown in Table I.

Example 1

5.2 ppm of Anionic Polymer 1 was added to the aqueous slurry of taconite tailings, mixed, and then 5.2 ppm of Cationic Polymer 1 was added to the slurry by the procedure described supra and the slurry tested as described, supra.

The results are shown in Table I.

Example 2

5.2 ppm of Anionic Polymer 1 was added to the

aqueous slurry of taconite tailings, mixed, and then 5.2 ppm of Cationic Polymer 2 was added to the slurry by the procedure described supra and the slurry tested as described, supra.

The results are shown in Table I.

Control F

5.2 ppm of Anionic Polymer 2 was added to the aqueous slurry of taconite tailings, mixed, and then another 5.2 ppm of Anionic Polymer 2 was added to the slurry by the procedure described supra and the slurry tested as described, supra.

The results are shown in Table I.

Example 3

5.2 ppm of Anionic Polymer 2 was added to the aqueous slurry of taconite tailings, mixed and then 5.2 ppm of Cationic Polymer 2 was added to the slurry by the procedure described supra and the slurry tested as described, supra.

The results are shown in Table I.

Control G

6.5 ppm of Cationic Polymer 2 was added to the aqueous slurry of taconite tailings, mixed and then another 6.5 ppm of Cationic Polymer 2 was added to the slurry by the procedure described supra and the slurry tested as described, supra.

The results are shown in Table I.

Control H

6.5 ppm of Anionic Polymer 1 was added to the aqueous slurry of taconite tailings, mixed, and then

another 6.5 ppm of Anionic Polymer 1 was added to the slurry by the procedure described supra and the slurry tested as described, supra.

The results are shown in Table I.

Example 4

6.5 ppm of Anionic Polymer 1 was added to the aqueous slurry of taconite tailings, mixed, and then 6.5 ppm of Cationic Polymer 2 was added to the slurry by the procedure described supra and the slurry tested as described, supra.

The results are shown in Table I.

TABLE I

| Example | Flocculant I | Amount of Flocculant I (ppm) | Flocculant II | Amount of Flocculant II (ppm) | $t'_{70}$ (sec) | $T_5$ (%) | $S_5$ (%) |
|---|---|---|---|---|---|---|---|
| Control A | - | - | - | - | 483 | 4 | 9.6 |
| Control B | Cationic Polymer 1 | 10.4 | - | - | 120 | 8 | 17.6 |
| Control C | Cationic Polymer 1 | 5.2 | Cationic Polymer I | 5.2 | 105 | 31 | 19.0 |
| Control D | Anionic Polymer 1 | 10.4 | - | - | 102 | 10 | 20.6 |
| Control E | Anionic Polymer 1 | 5.2 | Anionic Polymer 1 | 5.2 | 45 | 23 | 27.4 |
| 1 | Anionic Polymer 1 | 5.2 | Cationic Polymer 1 | 5.2 | 69 | 34 | 23.4 |
| 2 | Anionic Polymer 1 | 5.2 | Cationic Polymer 2 | 5.2 | 63 | 36 | 24.6 |
| Control F | Anionic Polymer 2 | 5.2 | Anionic Polymer 2 | 5.2 | 117 | 17 | 18.3 |
| 3 | Anionic Polymer 2 | 5.2 | Cationic Polymer 2 | 5.2 | 99 | 23 | 19.8 |
| Control G | Cationic Polymer 2 | 6.5 | Cationic Polymer 2 | 6.5 | 90 | 40 | 20.9 |
| Control H | Anionic Polymer 1 | 6.5 | Anionic Polymer 1 | 6.5 | 39 | 35 | 28.6 |
| 4 | Anionic Polymer 1 | 6.5 | Cationic Poly mer 2 | 6.5 | 39 | 55 | 28.6 |

Control I

4.9 ppm of Cationic Polymer 1 was added to the aqueous slurry of taconite tailings, mixed and then another 4.9 ppm of Cationic Polymer 1 was added to the slurry by the procedure described *supra* and the slurry tested as described, *supra*.

The results are shown in Table II.

Control J

4.9 ppm of Cationic Polymer 2 was added to the aqueous slurry of taconite tailings, mixed and then another 4.9 ppm of Cationic Polymer 2 was added to the slurry by the procedure described *supra* and the slurry tested as described, *supra*.

The results are shown in Table II.

Control K

4.9 ppm of Anionic Polymer 1 was added to the aqueous slurry of taconite tailings, mixed and then another 4.9 ppm of Anionic Polymer 1 was added to the slurry by the procedure described *supra* and the slurry tested as described, *supra*.

The results are shown in Table II.

Example 5

4.9 ppm of Anionic Polymer 1 was added to the aqueous slurry of taconite tailings, mixed and then 4.9 ppm of Cationic Polymer 2 was added to the slurry by the procedure described *supra* and the slurry tested as described, *supra*.

The results are shown in Table II.

Example 6

4.9 ppm of Anionic Polymer 1 was added to

the aqueous slurry of taconite tailing, mixed and then 4.9 ppm of Cationic Polymer 1 was added to the slurry by the procedure described <u>supra</u> and the slurry tested as described, <u>supra</u>.

The results are shown in Table II.

<u>Control L</u>

4.9 ppm of Nonionic Polymer 1 was added to the aqueous slurry of taconite tailing, mixed and then another 4.9 ppm of Nonionic Polymer 1 was added to the slurry by the procedure described <u>supra</u> and the slurry tested as described, <u>supra</u>.

The results are shown in Table II.

<u>Example 7</u>

4.9 ppm of Nonionic Polymer 1 was added to the aqueous slurry of taconite tailing, mixed and then 4.9 ppm of Cationic Polymer 2 was added to the slurry by the procedure described <u>supra</u> and the slurry tested as described, <u>supra</u>.

The results are shown in Table II.

<u>Control M</u>

4.9 ppm of Anionic Polymer 3 was added to the aqueous slurry of taconite tailing, mixed and then another 4.9 ppm of Anionic Polymer 3 was added to the slurry by the procedure described <u>supra</u> and the slurry tested as described, <u>supra</u>.

The results are shown in Table II.

Example 8

4.9 ppm of Anionic Polymer 3 was added to the aqueous slurry of taconite tailings, mixed and then 4.9 ppm of Cationic Polymer 2 was added to the slurry by the procedure described *supra* and the slurry tested as described, *supra*.

The results are shown in Table II.

TABLE II

| Example | Flocculant I | Amount of Flocculant I (ppm) | Flocculant II | Amount of Flocculant II (ppm) | $t_{70}$ (sec) | $T_5$ (%) | $S_5$ (%) |
|---|---|---|---|---|---|---|---|
| Control I | Cationic Polymer 1 | 4.9 | Cationic Polymer 1 | 4.9 | 60 | 14 | 26.0 |
| Control J | Cationic Polymer 2 | 4.9 | Cationic Polymer 2 | 4.9 | 43 | 8 | 27.5 |
| Control K | Anionic Polymer 1 | 4.9 | Anionic Polymer 1 | 4.9 | 21 | 21 | 40.5 |
| 5 | Anionic Polymer 1 | 4.9 | Cationic Polymer 2 | 4.9 | 27 | 29 | 32.2 |
| 6 | Anionic Polymer 1 | 4.9 | Cationic Polymer 1 | 4.9 | 33 | 34 | 32.2 |
| Control L | Nonionic Polymer 1 | 4.9 | Nonionic Polymer 1 | 4.9 | 21 | 5 | 38.8 |
| 7 | Nonionic Polymer 1 | 4.9 | Cationic Polymer 2 | 4.9 | 30 | 10 | 33.4 |
| Control M | Anionic Polymer 3 | 4.9 | Anionic Polymer 3 | 4.9 | 21 | 8 | 38.8 |
| 8 | Anionic Polymer 3 | 4.9 | Cationic Polymer 2 | 4.9 | 30 | 11 | 33.4 |

Control N

6.5 ppm of Cationic Polymer 2 was added tp the aqueous slurry of taconite tailing, mixed and then another 6.5 ppm of Cationic Polymer 2 was added to the slurry by the procedure described supra and the slurry tested as described, supra.

The results are shown in Table III.

Control O

6.5 ppm of Anionic Polymer 1 was added to the aqueous slurry of taconite tailing, mixed and then another 6.5 ppm of Anionic Polymer 1 was added to the slurry by the procedure described supra and the slurry tested as described, supra.

The results are shown in Table III.

Example 9

6.5 ppm of Anionic Polymer 1 was added to the aqueous slurry of taconite tailing, mixed and then 6.5 ppm of Cationic Polymer 2 was added to the slurry by the procedure described supra and the slurry tested as described, supra.

The results are shown in Table III.

Control P

6.5 ppm of Anionic Polymer 2 was added to the aqueous slurry of taconite tailing, mixed and then another 6.5 ppm of Anionic Polymer 2 was added to the slurry by the procedure described supra and the slurry tested as described, supra.

The results are shown in Table III.

Example 10

6.5 ppm of Anionic Polymer 2 was added to the aqueous slurry of taconite tailing, mixed

and then 6.5 ppm of Cationic Polymer 2 was added to the slurry by the procedure described supra and the slurry tested as described, supra.

The results are shown in Table III.

Control Q

6.5 ppm of Anionic Polymer 10 was added to the aqueous slurry of taconite tailing, mixed and then another 6.5 ppm of Anionic Polymer 10 was added to the slurry by the procedure described supra and the slurry tested as described, supra.

The results are shown in Table III.

Example 11

6.5 ppm of Anionic Polymer 10 was added to the aqueous slurry of taconite tailing, mixed and then 6.5 ppm of Cationic Polymer 2 was added to the slurry by the procedure described supra and the slurry tested as described, supra.

The results are shown in Table III.

Control R

6.5 ppm of Anionic Polymer 3 was added to the aqueous slurry of taconite tailing, mixed- and then another 6.5 ppm of Anionic Polymer 3 was added to the slurry by the procedure described supra and the slurry tested as described, supra.

The results are shown in Table III.

Example 12

6.5 ppm of Anionic Polymer 3 was added to the aqueous slurry of taconite tailing, mixed and then 6.5 ppm of Cationic Polymer 2 was added to the slurry by the procedure described *supra* and the slurry tested as described, *supra*.

The results are shown in Table III.

Control S

6.5 ppm of Nonionic Polymer 1 was added to the aqueous slurry of taconite tailing, mixed and then another 6.5 ppm of Nonionic Polymer 1 was added to the slurry by the procedure described *supra*, and the slurry tested as described, *supra*.

The results are shown in Table III.

Example 13

6.5 ppm of Nonionic Polymer 1 was added to the aqueous slurry of taconite tailing, mixed and then 6.5 ppm of Cationic Polymer 2 was added to the slurry by the procedure described *supra* and the slurry tested as described, *supra*.

The results are shown in Table III.

Control T

6.5 ppm of Cationic Polymer 1 was added to the aqueous slurry of taconite tailing, mixed and then another 6.5 ppm of Cationic Polymer 1 was added to the slurry by the procedure described *supra* and the slurry tested as described, *supra*.

The results are shown in Table III.

Example 14

6.5 ppm of Anionic Polymer 1 was added to

the aqueous slurry of taconite tailing, mixed and then 6.5 ppm of Cationic Polymer 1 was added to the slurry by the procedure described supra and the slurry tested as described, supra.

The results are shown in Table III.

Example 15

6.5 ppm of Anionic Polymer 2 was added to the aqueous slurry of taconite tailing, mixed and then 6.5 ppm of Cationic Polymer 1 was added to the slurry by the procedure described supra and the slurry tested as described, supra.

The results are shown in Table III.

Example 16

6.5 ppm of Anionic Polymer 10 was added to the aqueous slurry of taconite tailing, mixed and then 6.5 ppm of Cationic Polymer 1 was added to the slurry by the procedure described supra and the slurry tested as described, supra.

The results are shown in Table III.

Example 17

6.5 ppm of Anionic Polymer 3 was added to the aqueous slurry of taconite tailing, mixed and then 6.5 ppm of Cationic Polymer 1 was added to the slurry by the procedure described supra and the slurry tested as described, supra.

The results are shown in Table III.

TABLE III

| Example | Flocculant I | Amount of Flocculant I (ppm) | Flocculant II | Amount of Flocculant II (ppm) | $t_{70}$ (sec) | $T_5$ (%) | $S_5$ (%) |
|---|---|---|---|---|---|---|---|
| Control N | Cationic Polymer 2 | 6.5 | Cationic polymer 2 | 6.5 | 105 | 45 | 19.4 |
| Control O | Anionic Polymer 1 | 6.5 | Anionic Polymer 1 | 6.5 | 33 | 35 | 29.4 |
| 9 | Anionic Polymer 1 | 6.5 | Cationic Polymer 2 | 6.5 | 63 | 54 | 25.2 |
| Control P | Anionic Polymer 2 | 6.5 | Anionic Polymer 2 | 6.5 | 75 | 39 | 22.3 |
| 10 | Anionic Polymer 2 | 6.5 | Cationic Polymer 2 | 6.5 | 81 | 47 | 22.3 |
| Control Q | Anionic Polymer 10 | 6.5 | Anionic Polymer 10 | 6.5 | 39 | 39 | 28.5 |
| 11 | Anionic Polymer 10 | 6.5 | Cationic Polymer 2 | 6.5 | 60 | 59 | 25.2 |
| Control R | Anionic Polymer 3 | 6.5 | Anionic Polymer 3 | 6.5 | 33 | 14 | 30.8 |
| 12 | Anionic Polymer 3 | 6.5 | Cationic Polymer 2 | 6.5 | 60 | 44 | 25.2 |
| Control S | Nonionic Polymer 1 | 6.5 | Nonionic Polymer 1 | 6.5 | 45 | 9 | 29.0 |
| 13 | Nonionic Polymer 1 | 6.5 | Cationic Polymer 2 | 6.5 | 69 | 26 | 23.9 |
| Control T | Cationic Polymer 1 | 6.5 | Cationic Polymer 1 | 6.5 | 130 | 43 | 17.1 |
| 14 | Anionic Polymer 1 | 6.5 | Cationic Polymer 1 | 6.5 | 60 | 60 | 25.9 |
| 15 | Anionic Polymer 2 | 6.5 | Cationic Polymer 1 | 6.5 | 99 | 47 | 20.6 |
| 16 | Anionic Polymer 10 | 6.5 | Cationic Polymer 1 | 6.5 | 60 | 66 | 24.2 |
| 17 | Anionic Polymer 3 | 6.5 | Cationic Polymer 1 | 6.5 | 66 | 47 | 25.2 |

Control U

7.5 ppm of Cationic Polymer 1 was added to the aqueous slurry of taconite tailing, mixed and then another 7.5 ppm of Cationic Polymer 1 was added to the slurry by the procedure described supra and the slurry tested as described, supra.

The results are shown in Table IV.

Control V

7.5 ppm of Nonionic Polymer 1 was added to the aqueous slurry of taconite tailing, mixed and then another 7.5 ppm of Nonionic Polymer 1 was added to the slurry by the procedure described supra and the slurry tested as described, supra.

The results are shown in Table IV.

Example 18

7.5 ppm of Nonionic Polymer 1 was added to the aqueous slurry of taconite tailing, mixed and then 7.5 ppm of Cationic Polymer 1 was added to the slurry by the procedure described supra and the slurry tested as described, supra.

The results are shown in Table IV.

Control W

7.5 ppm of Anionic Polymer 4 was added to the aqueous slurry of taconite tailing, mixed and then another 7.5 ppm of Anionic Polymer 4 was added to the slurry by the procedure described supra and the slurry tested as described, supra.

The results are shown in Table IV.

Example 19

7.5 ppm of Anionic Polymer 4 was added to the aqueous slurry of taconite tailing, mixed

and then 7.5 ppm of Cationic Polymer 1 was added to the slurry by the procedure described *supra* and the slurry tested as described, *supra*.

The results are shown in Table IV.

Control X

7.5 ppm of Anionic Polymer 5 was added to the aqueous slurry of taconite tailing, mixed and then another 7.5 ppm of Anionic Polymer 5 was added to the slurry by the procedure described *supra* and the slurry tested as described, *supra*.

The results are shown in Table IV.

Example 20

7.5 ppm of Anionic Polymer 5 was added to the aqueous slurry of taconite tailing, mixed and then 7.5 ppm of Cationic Polymer 1 was added to the slurry by the procedure described *supra* and the slurry tested as described, *supra*.

The results are shown in Table IV.

Control Y

7.5 ppm of Anionic Polymer 3 was added to the aqueous slurry of taconite tailing, mixed and then another 7.5 ppm of Anionic Polymer 3 was added to the slurry by the procedure described *supra* and the slurry tested as described, *supra*.

The results are shown in Table IV.

Example 21

7.5 ppm of Anionic Polymer 3 was added to the aqueous slurry of taconite tailing, mixed and then 7.5 ppm of Cationic Polymer 1 was added

to the slurry by the procedure described _supra_ and the slurry tested as described, _supra_.

The results are shown in Table IV.

## Control Z

7.5 ppm of Anionic Polymer 6 was added to the aqueous slurry of taconite tailing, mixed and then another 7.5 ppm of Anionic Polymer 6 was added to the slurry by the procedure described _supra_ and the slurry tested as described, _supra_.

The results are shown in Table IV.

## Example 22

7.5 ppm of Anionic Polymer 6 was added to the aqueous slurry of taconite tailing, mixed and then 7.5 ppm of Cationic Polymer 1 was added to the slurry by the procedure described _supra_ and the slurry tested as described, _supra_.

The results are shown in Table IV.

## Control AA

7.5 ppm of Anionic Polymer 7 was added to the aqueous slurry of taconite tailing, mixed and then another 7.5 ppm of Anionic Polymer 7 was added to the slurry by the procedure described _supra_ and the slurry tested as described, _supra_.

The results are shown in Table IV.

## Example 23

7.5 ppm of Anionic Polymer 7 was added to the aqueous slurry of taconite tailing, mixed and then 7.5 ppm of Cationic Polymer 1 was added

to the slurry by the procedure described *supra* and the slurry tested as described, *supra*.

The results are shown in Table IV.

Control BB

7.5 ppm of Anionic Polymer 8 was added to the aqueous slurry of taconite tailing, mixed and then another 7.5 ppm of Anionic Polymer 8 was added to the slurry by the procedure described *supra* and the slurry tested as described, *supra*.

The results are shown in Table IV.

Example 24

7.5 ppm of Anionic Polymer 8 was added to the aqueous slurry of taconite tailing, mixed and then 7.5 ppm of Cationic Polymer 1 was added to the slurry by the procedure described *supra* and the slurry tested as described, *supra*.

The results are shown in Table IV.

Control CC

7.5 ppm of Anionic Polymer 9 was added to the aqueous slurry of taconite tailing, mixed and then another 7.5 ppm of Anionic Polymer 9 was added to the slurry by the procedure described *supra* and the slurry tested as described, *supra*.

The results are shown in Table IV.

Example 25

7.5 ppm of Anionic Polymer 9 was added to the aqueous slurry of taconite tailing, mixed and then 7.5 ppm of Cationic Polymer 1 was added to the slurry by the procedure described *supra* and the slurry tested as described, *supra*.

The results are shown in Table IV.

## TABLE IV

| Example | Flocculant I | Amount of Flocculant I (ppm) | Flocculant II | Amount of Flocculant II (ppm) | $t_{70}$ (sec) | $T_5$ (%) | $S_5$ (%) |
|---|---|---|---|---|---|---|---|
| Control U | Cationic Polymer 1 | 7.5 | Cationic Polymer 1 | 7.5 | 94 | 44 | 23.1 |
| Control V | Nonionic Polymer 1 | 7.5 | Nonionic Polymer 1 | 7.5 | 26 | 15 | 44.2 |
| 18 | Nonionic Polymer 1 | 7.5 | Cationic Polymer 1 | 7.5 | 57 | 42 | 33.5 |
| Control W | Anionic Polymer 4 | 7.5 | Anionic Polymer 4 | 7.5 | 27 | 15 | 42.8 |
| 19 | Anionic Polymer 4 | 7.5 | Cationic Polymer 1 | 7.5 | 54 | 42 | 33.8 |
| Control X | Anionic Polymer 5 | 7.5 | Anionic Polymer 5 | 7.5 | 28 | 10 | 47.0 |
| 20 | Anionic Polymer 5 | 7.5 | Cationic Polymer 1 | 7.5 | 47 | 53 | 38.0 |
| Control Y | Anionic Polymer 3 | 7.5 | Anionic Polymer 3 | 7.5 | 25 | 20 | 45.2 |
| 21 | Anionic Polymer 3 | 7.5 | Cationic Polymer 1 | 7.5 | 50 | 46 | 35.7 |
| Control Z | Anionic Polymer 6 | 7.5 | Anionic Polymer 6 | 7.5 | 26 | 20 | 42.3 |
| 22 | Anionic Polymer 6 | 7.5 | Cationic Polymer 1 | 7.5 | 47 | 58 | 35.7 |
| Control AA | Anionic Polymer 7 | 7.5 | Anionic Polymer 7 | 7.5 | 30 | 24 | 39.3 |
| 23 | Anionic Polymer 7 | 7.5 | Cationic Polymer 1 | 7.5 | 56 | 56 | 31.1 |
| Control BB | Anionic Polymer 8 | 7.5 | Anionic Polymer 8 | 7.5 | 34 | 27 | 38.6 |
| 24 | Anionic Polymer 8 | 7.5 | Cationic Polymer 1 | 7.5 | 57 | 61 | 30.3 |
| Control CC | Anionic Polymer 9 | 7.5 | Anionic Polymer 9 | 7.5 | 99 | 2 | 26.6 |
| 25 | Anionic Polymer 9 | 7.5 | Cationic Polymer 1 | 7.5 | 90 | 12 | 23.7 |

Control DD

2.5 ppm of Cationic Polymer 1 was added to the aqueous slurry of taconite tailing, mixed and then another 2.5 ppm of Cationic Polymer 1 was added to the slurry by the procedure described supra and the slurry tested as described, supra.

The results are shown in Table V.

Control EE

2.5 ppm of Anionic Polymer 10 was added to the aqueous slurry of taconite tailing, mixed and then another 2.5 ppm of Anionic Polymer 10 was added to the slurry by the procedure described supra and the slurry tested as described, supra.

The results are shown in Table V.

Example 26

2.5 ppm of Anionic Polymer 10 was added to the aqueous slurry of taconite tailing, mixed and 2.5 ppm of Cationic Polymer 1 was added to the slurry by the procedure described supra and the slurry tested as described, supra.

The results are shown in Table V.

Control FF

5.0 ppm of Cationic Polymer 1 was added to the aqueous slurry of taconite tailing, mixed and then another 5.0 ppm of Cationic Polymer 1 was added to the slurry by the procedure described supra and the slurry tested as described, supra.

The results are shown in Table V.

Control GG

5.0 ppm of Anionic Polymer 10 was added

to the aqueous slurry of taconite tailing, mixed and then another 5.0 ppm of Anionic Polymer 10 was added to the slurry by the procedure described supra and the slurry tested as described, supra.

The results are shown in Table V.

Example 27

5.0 ppm of Anionic Polymer 10 was added to the aqueous slurry of taconite tailing, mixed and then 5.0 ppm of Cationic Polymer 1 was added to the slurry by the procedure described supra and the slurry tested as described, supra.

The results are shown in Table V.

Control HH

7.5 ppm of Cationic Polymer 1 was added to the aqueous slurry of taconite tailing, mixed and then another 7.5 ppm of Cationic Polymer 1 was added to the slurry by the procedure described supra and the slurry tested as described, supra.

The results are shown in Table V.

Control II

7.5 ppm of Anionic Polymer 10 was added to the aqueous slurry of taconite tailing, mixed and then another 7.5 ppm of Anionic Polymer 10 was added to the slurry by the procedure described supra and the slurry tested as described, supra.

The results are shown in Table V.

Example 28

7.5 ppm of Anionic Polymer 10 was added to the aqueous slurry of taconite tailing, mixed

and then 7.5 ppm of Cationic Polymer 1 was added to the slurry by the procedure described _supra_ and the slurry tested as described, _supra._

The results are shown in Table V.

TABLE V

| Example | Flocculant I | Amount of Flocculant I (ppm) | Flocculant II | Amount of Flocculant II (ppm) | $t_{70}$ (sec) | $T_5$ (%) | $S_5$ (%) |
|---|---|---|---|---|---|---|---|
| Control DD | Cationic Polymer 1 | 2.5 | Cationic Polymer 1 | 2.5 | 120 | 12 | 20.4 |
| Control EE | Anionic Polymer 10 | 2.5 | Anionic Polymer 10 | 2.5 | 90 | 12 | 24.9 |
| 26 | Anionic Polymer 10 | 2.5 | Cationic Polymer 1 | 2.5 | 105 | 16 | 22.7 |
| Control FF | Cationic Polymer 1 | 5.0 | Cationic Polymer 1 | 5.0 | 102 | 42 | 22.4 |
| Control GG | Anionic Polymer 10 | 5.0 | Anionic Polymer 10 | 5.0 | 57 | 43 | 30.7 |
| 27 | Anionic Polymer 10 | 5.0 | Cationic Polymer 1 | 5.0 | 63 | 66 | 27.7 |
| Control HH | Cationic Polymer 1 | 7.5 | Cationic Polymer 1 | 7.5 | 90 | 57 | 23.2 |
| Control II | Anionic Polymer 10 | 7.5 | Anionic Polymer 10 | 7.5 | 30 | 54 | 36.2 |
| 28 | Anionic Polymer 10 | 7.5 | Cationic Polymer 1 | 7.5 | 57 | 81 | 28.5 |

PATENTANWÄLTE
WUESTHOFF - v. PECHMANN - BEHRENS - GOETZ

PROFESSIONAL REPRESENTATIVES BEFORE THE EUROPEAN PATENT OFFICE
MANDATAIRES AGRÉES PRES L'OFFICE EUROPÉEN DES BREVETS

D-8000 MÜNCHEN 90
SCHWEIGERSTRASSE 2
TELEFON. (089) 66 20 51
TELEGRAMM: PROTECTPATENT
TELEX. 524 070

0055489



WHAT IS CLAIMED IS:

1. A process for flocculating an aqueous slurry containing minerals which comprises the sequential addition of a synergistic amount of an anionic polymer followed by a cationic polymer and thereafter allowing said minerals to settle from said slurry to provide a clear aqueous supernatant.

2. A process as defined in claim 1 wherein the aqueous slurry containing minerals comprises taconite tailings.

0055489

European Patent Office

# EUROPEAN SEARCH REPORT

Application number

EP 81 11 0828

| Category | Citation of document with indication, where appropriate, of relevant passages | Relevant to claim | CLASSIFICATION OF THE APPLICATION (Int. Cl. 3) |
| --- | --- | --- | --- |
| X | GB - A - 967 607 (DOW CHEMICAL)<br>* page 1, lines 11-78; page 3, lines 20-26 * | 1 | C 02 F 1/56<br>B 03 D 3/06 |
| X | GB - A - 1 049 803 (ROHM & HAAS)<br>* page 1, lines 8-12; page 1, line 38 - page 2, line 57; page 2, lines 83-110 * | 1,2 | |
| X | DE - A - 1 642 795 (CHEMISCHE FABRIK STOCKHAUSEN)<br>* page 1; page 2, paragraph 2 * | 1 | TECHNICAL FIELDS SEARCHED (Int.Cl. 3)<br>C 02 F |
| A | FR - A - 1 452 107 (NALCO)<br>* page 8, abstract A,1°,II, V 3 * | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
| --- | --- | --- |
| The Hague | 04-03-1982 | TEPLY |

EPO Form 1503.1 06.78